# EUROPÄISCHE PATENTSCHRIFT

(11) **EP 2 226 697 B1**
(45) Veröffentlichungstag und Bekanntmachung des Hinweises auf die Patenterteilung: **26.09.2012**
(21) Anmeldenummer: 10001747.4
(22) Anmeldetag: 20.02.2010
(51) Int. Cl.: F16K 1/10, F16K 1/38, F16K 31/60, G05D 7/01, F16K 17/34

(54) **Durchflussmengenregler**
Flow rate regulator
Régulateur de débit

(30) Priorität: 05.03.2009 DE 102009011343
(43) Veröffentlichungstag der Anmeldung: 08.09.2010
(73) Patentinhaber: Neoperl GmbH, 79379 Müllheim (DE)
(72) Erfinder: Neath, Noel, Kempsey Worcestershire WR5 3PY (GB); Hart, Keith, Welland Worcestershire WR13 6NE (GB)
(74) Vertreter: Maucher, Wolfgang

(56) Entgegenhaltungen:
- EP-A1- 1 092 834
- EP-A2- 1 600 839
- US-A- 3 954 019

## Beschreibung

Die Erfindung betrifft einen Durchflussmengenregler mit einem Reglergehäuse, in dessen Gehäuse-Innenraum ein Regelkern sowie ein den Regelkern umschließender ringförmiger Drosselkörper aus elastischem Material vorgesehen ist, die zwischen sich einen sich unter dem Druck des durchströmenden Fluids verändernden Steuerspalt begrenzen, wobei der Regelkern an seinem Außenumfang eine sich in Längsrichtung verändernde Regelprofilierung trägt, wobei der Regelkern zum Variieren des Steuerspalts durch eine Veränderung der Relativposition von Regelkern und Drosselkörper in Längsrichtung verschieblich geführt ist, und wobei am Reglergehäuse zumindest eine als Fluideinlass ausgestaltete Gehäuseöffnung vorgesehen ist.

In Gasthermen, die zum Aufheizen des Wassers in einer sanitären Wasserleitung eingesetzt werden, ist die erreichbare Wassertemperatur von der Durchflussleistung des Wassers abhängig. Da der Wasserdruck und die Durchflussleistung von Wasser von Land zu Land und von Region zu Region variieren können, werden in den handelsüblichen Gasthermen bereits herstellerseitig fest eingestellte Mengenregler verwendet, die das zur Gastherme strömende Wasser unabhängig vom Wasserdruck auf ein maximales Wasservolumen pro Zeiteinheit einregeln sollen. Um die Durchflussleistung eines solchen Mengenreglers an die länderspezifischen oder regionalen Gegebenheiten anpassen zu können und um nicht für jedes Land oder jede Region, in der die Gastherme verkauft und eingesetzt werden soll, jeweils den passenden, fest eingestellten Mengenregler bevorraten zu müssen, hat man bereits Durchflussmengenregler der eingangs erwähnten Art geschaffen.

Die vorbekannten Durchflussmengenregler weisen einen ringförmigen Drosselkörper aus elastischem Material auf, der zwischen sich und einem Regelkern einen Steuerspalt begrenzt. Der Regelkern weist an seinem Außenumfang eine Regelprofilierung auf, in die sich der ringförmige Drosselkörper unter dem steigenden Druck des durch den Steuerspalt strömenden Wassers zunehmend derart einformt, dass der Steuerspalt sich unter dem Druck des durchströmenden Fluids verengt und das Wasservolumen auf ein unabhängig vom Wasserdruck festgelegtes Wasservolumen einregelt. Dabei ist der Regelkern an einer Gewindespindel gehalten und in Längsrichtung derart verschieblich geführt, dass zum Variieren des Steuerspalts durch eine Veränderung der Relativposition von Regelkern und Drosselkörper eine Drehbewegung der Gewindespindel in eine Längsbewegung des Regelkerns umsetzbar ist. Durch eine Drehbewegung an der Gewindespindel lässt sich der vorbekannte Durchflussmengenregler somit an die länderspezifisch oder regional unterschiedlichen Durchflussleistungen anpassen.

Die vorbekannten einstellbaren Durchflussmengenregler bestehen meist aus der Gewindespindel, dem an der Gewindespindel gehaltenen Regelkern sowie dem den Regelkern umschließenden Drosselkörper. Die zur Anwendung mit einem solchen Durchflussmengenregler bestimmten Gasthermen sind herstellerseitig an die handelsüblichen Durchflussmengenregler und deren Bestandteile anzupassen. Die Anpassung der Gasthermen an die in ihrer äußeren Gestalt zum Teil komplexen Durchflussmengenregler ist mit einem nicht unerheblichen konstruktiven Aufwand verbunden.

Aus der EP 1 600 839 A2 ist bereits ein Durchflussmengenregler der eingangs erwähnten Art bekannt, der einen ringförmigen Drosselkörper aus elastischem Material aufweist. Um den maximalen Volumenstrom bei Bedarf verändern und neu festlegen zu können, ist der im Durchtrittskanal befindliche Regelkern relativ zum Drosselkörper verstellbar. Das Reglergehäuse des vorbekannten Durchflussmengenreglers weist dazu ein inneres verschiebliches Gehäuseteil auf, das an seinem Außenumfang zumindest ein nach außen vorstehendes Steuerelement trägt. Das zumindest eine Steuerelement ist beidseits von einem äußeren Gehäuseabschnitt dichtend umgriffen, welche äußeren Gehäuseabschnitte zueinander ortsfest angeordnet sind. Das innere Gehäuseteil trägt den konischen Regelkern, so dass dieser konische Regelkern relativ zum Drosselkörper derart verschoben werden kann, dass sich durch die Konizität des Regelkerns der zwischen Drosselkörper und Regelkern vorgesehene Steuerspalt und mit ihm der maximale Volumenstrom des Durchflussmengenreglers verändert. Da das innere verschiebliche Gehäuseteil von dem äußeren Gehäuseabschnitt dichtend umgriffen wird, und da das Steuerelement am inneren Gehäuseteil nach außen vorsteht, ist der Volumenstrom des vorbekannten Durchflussmengenreglers auf einfache Weise veränderbar, ohne dass dazu eine Demontage des Durchflussmengenreglers erforderlich ist. An den Stirnenden der äußeren Gehäuseabschnitte ist jeweils ein Anschlussstutzen vorgesehen, so dass der vorbekannte Durchflussmengenregler in eine gegebenenfalls auch starre Rohrleitung zwischengeschaltet werden kann. Da bei dem vorbekannten Durchflussmengenregler der Zu- und der Ablauf an den Gehäusestirnseiten vorgesehen ist, und da bei dem vorbekannten Durchflussmengenregler die Gehäuseteile und -abschnitte relativ zueinander verstellt werden müssen, wird die Handhabung des vorbekannten Durchflussmengenreglers nicht unwesentlich erschwert. Der vorbekannte Durchflussmengenregler lässt sich daher nur in bestimmten Einbausituationen vorteilhaft einsetzen, bei denen dieser vorbekannte Durchflussmengenregler in eine gegebenenfalls auch starre Rohrleitung zwischengeschaltet werden kann.

Aus der EP 1 092 834 A1 ist ein Regelventil vorbekannt, in dessen Ventilgehäuse ein kegelstumpfförmiger Ventilkörper derart gegen einen Ventilsitz verschieblich geführt ist, dass der Ventilkörper durch eine Längsbewegung zwischen einer Offenstellung und einer Schließstellung bewegbar ist, in welcher Schließstellung der Ventilkörper an dem ihn umgreifenden Ventilsitz dichtend anliegt. Der Ventilkörper ist an einer im Ventilgehäuse drehbar gelagerten Gewindespindel derart gehalten, dass eine Drehbewegung der Gewindespindel in eine Längsbewegung des Ventilkörpers umsetzbar ist.

Ein vergleichbares Regelventil kennt man auch aus der US 3 954 019 A.

Da es sich bei den aus EP 1 092 834 A1 und US 3 954 019 A vorbekannten Regelventilen nicht um einen gattungsgemäßen Durchflussmengenregler handelt, ist eine Begrenzung des pro Zeiteinheit durchströmenden Wasservolumens auf einen vom Wasserdruck unabhängigen Maximalwert nicht möglich.

Es besteht daher die Aufgabe, einen Durchflussmengenregler der eingangs erwähnten Art zu schaffen, der in unterschiedlichsten Einbausituationen einsetzbar ist, ohne dass aufwendige konstruktive Anpassungen notwendig werden.

Die erfindungsgemäße Lösung dieser Aufgabe besteht bei dem Durchflussmengenregler der eingangs erwähnten Art darin, dass der Regelkern an einer Gewindespindel gehalten ist, dass eine Drehbewegung der Gewindespindel in eine Längsbewegung des Regelkerns umsetzbar ist, dass die Gewindespindel von einer Gehäusestirnseite aus betätigbar ist und dass die zumindest eine als Fluideinlass ausgestaltete Gehäuseöffnung am Gehäuseumfang des als Einbaukartusche oder Einsetzpatrone ausgestalteten Reglergehäuses angeordnet ist.

Der erfindungsgemäße Durchflussmengenregler hat ein Reglergehäuse, das als Einbaukartusche oder als Einsetzpatrone ausgestaltet ist. Die Einbaumaße des als Einbaukartusche oder als Einsetzpatrone ausgestalteten Reglergehäuses können derart vereinfacht werden, dass eine aufwendige konstruktive Anpassung an die zum Einbau des erfindungsgemäßen Durchflussmengenreglers bestimmte Einbausituation nicht notwendig ist. Da im Gehäuseinnenraum der verschieblich geführte Regelkern sowie der den Regelkern umschließende Drosselkörper angeordnet ist, sind alle wesentlichen Bestandteile des erfindungsgemäßen Durchflussmengenreglers im Reglergehäuse geschützt untergebracht. Über die von einer Gehäusestirnseite manuell oder mittels eines motorischen Antriebes betätigbare Gewindespindel lässt sich die Relativposition von Drosselkörper und Regelkern bei Bedarf derart verändern, dass der Steuerspalt und mit ihm die maximale, jedoch druckunabhängige Durchflussleistung des erfindungsgemäßen Durchflussmengenreglers variiert werden kann.

Eine bevorzugte Weiterbildung gemäß der Erfindung sieht vor, dass an einem über eine Gehäusestirnseite vorstehenden Spindelende eine Handhabe drehfest und zwischen zwei Schiebeendstellung verschieblich gehalten ist, und dass die Handhabe in der einen Schiebeendstellung verdrehbar und in der anderen Schiebeendstellung drehfest mit dem Reglergehäuse verbunden ist. Da die mit der Gewindespindel drehfest verbundene Handhabe in der einen Schiebeendstellung verdrehbar ist, kann in dieser Schiebeendstellung durch eine Drehbewegung an der Handhabe auch die Gewindespindel derart verdreht werden, dass die maximale Durchflussleistung des erfindungsgemäßen Durchflussmengenreglers veränderbar ist. In der anderen Schiebeendstellung ist die Handhabe mit dem Reglergehäuse derart drehfest verbunden, dass damit die gewählte Relativposition zwischen Drosselkörper und Regelkern und damit auch die gewählte Durchflussleistung gesichert ist. In dieser Schiebeendstellung kann die Handhabe durch eine Siegelkappe verschlossen und gegen unberechtigte Manipulationen gesichert werden.

Dabei ist es vorteilhaft, wenn die vorzugsweise als Stellrad ausgestaltete Handhabe eine Verzahnung oder dergleichen Profilierung trägt, die in einer Schiebeendstellung der Handhabe in eine komplementäre Verzahnung oder dergleichen Gegenprofilierung am Reglergehäuse drehfest eingreift. Durch diese miteinander zusammenwirkenden Verzahnungen an der Handhabe einerseits und am Reglergehäuse andererseits wird eine feste Verbindung dieser Bauteile in der einen Schiebeendstellung erreicht.

Um die Drehbewegung der Gewindespindel in eine Längsbewegung des Regelkerns umsetzen zu können, ist es zweckmäßig, wenn auf das Außengewinde der Gewindespindel das Innengewinde eines Mitnehmers aufgeschraubt ist und wenn der Mitnehmer mit dem Regelkern verbunden ist. Zu demselben Zweck sieht eine weitere vorteilhafte Ausführungsform gemäß der Erfindung vor, dass der Mitnehmer zumindest einen Führungssteg trägt, welcher Führungssteg in einer ihm zugeordneten und in Gehäuse-Längsrichtung orientierten Führungsnut am Gehäuse-Innenumfang des Reglergehäuses verschieblich geführt ist.

Eine bevorzugte Ausführungsform gemäß der Erfindung sieht vor, dass vorzugsweise unterhalb des Steuerspalts und insbesondere an dem der Handhabe abgewandten Gehäuseendbereich zumindest eine umfangsseitige und/oder wenigstens eine stirnseitige Gehäuseöffnung als Fluidauslass ausgestaltet ist. Sind am Reglergehäuse zumindest eine umfangsseitige und/oder wenigstens eine stirnseitige Gehäuseöffnung als Fluidauslass vorgesehen, ist der erfindungsgemäße Durchflussmengenregler in unterschiedlichen Einbausituationen vorteilhaft einsetzbar.

Der erfindungsgemäße Durchflussmengenregler lässt sich auf einfache Weise in eine Leitungsöffnung einsetzen, die über ihre vom Reglergehäuse ausgefüllte Längserstreckung denselben lichten Durchmesser aufweist, wenn am Gehäuse-Außenumfang des Reglergehäuses vorzugsweise beidseits zumindest einer als Fluideinlass dienenden Gehäuseöffnung eine Ringdichtung oder dergleichen umlaufende Dichtung vorgesehen ist. Dabei kann auch der Durchflussmengenregler über seine gesamte Längserstreckung eine Außenkontur haben, die einen zylindrischen Hüllkreis ohne größere Querschnittsveränderungen definiert.

Damit sich der erfindungsgemäße Durchflussmengenregler in einer solch einfachen und insbesondere rotationssymmetrisch ausgestalteten Leitungsöffnung nicht unbeabsichtigt verdrehen kann, ist es vorteilhaft, wenn am Außenumfang des Reglergehäuses eine Drehsicherung vorgesehen ist.

Eine besonders einfache und mit geringem Aufwand herstellbare Ausführungsform gemäß der Erfindung sieht vor, dass die Handhabe auf die Gewindespindel und/oder der Regelkern auf den Mitnehmer vorzugsweise unlösbar verrastbar ist.

Eine besonders vorteilhafte Ausführungsform gemäß der Erfindung, welche die Handhabung des erfindungsgemäßen Durchflussmengenreglers wesentlich erleichtert sieht vor, dass der Handhabe eine Skalierung zugeordnet ist. Um die Einstellung des erfindungsgemäßen Durchflussmengenreglers noch zusätzlich zu erleichtern, kann es vorteilhaft sein, wenn die der Handhabe zugeordnete Skalierung eine zu dem auf die Handhabe ausgeübten Umdrehungsweg proportionale Skaleneinteilung hat.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: einen in einer perspektivischen Seitenansicht dargestellten Durchflussmengenregler, der ein als hülsenförmige oder zylindrische Einbaukartusche ausgestaltetes Reglergehäuse hat, in dessen Gehäuseinnenraum ein Regelkern vorgesehen ist, der mittels einer drehbar gelagerten Gewindespindel verschiebbar ist, welche Gewindespindel an ihrem über die Gehäusestirnseite vorstehenden Spindelende manuell verdrehbar ist, wobei der Regelkern in Figur 1 in seiner einen Schiebeendstellung gezeigt ist,
- Fig. 2: den ebenfalls in einer perspektivischen Seitenansicht gezeigten Durchflussmengenregler aus Figur 1 in der anderen Schiebeendstellung seines Regelkerns,
- Fig. 3: den Durchflussmengenregler aus Figur 1 und 2 in einen Draufsicht auf das über die Gehäusestirnseite vorstehende und mit einem als Handhabe dienenden Stellrad versehene Spindelende,
- Fig. 4: den in der Schiebeendstellung gemäß Figur 1 gezeigten Durchflussmengenregler aus den Figuren 1 bis 3 in einem Längsschnitt durch Schnittebene IV-IV aus Figur 3,
- Fig. 5: den Durchflussmengenregler aus den Figuren 1 bis 4 in einer Draufsicht auf das mit der Handhabe verbundene Spindelende,
- Fig. 6: den in der Schiebeendstellung gemäß Figur 2 gezeigten Durchflussmengenregler aus den Figuren 1 bis 5 in einem Längsschnitt durch Schnittebene VI-VI aus Figur 5,
- Fig. 7: den Durchflussmengenregler aus den Figuren 1 bis 6 in einem Querschnitt durch Schnittebene VII-VII aus Figur 6,
- Fig. 8: einen Detaillängsschnitt durch den Durchflussmengenregler gemäß den Figuren 1 bis 7,
- Fig. 9: eine auseinandergezogene Einzelteildarstellung des Durchflussmengenreglers gemäß den Figuren 1 bis 8,
- Fig. 10: den Durchflussmengenregler gemäß den Figuren 1 bis 9 in einer perspektivischen Seitenansicht, wobei die an dem einen Spindelende der Spindel vorgesehene Handhabe sich in einer Schiebeendstellung befindet, in welcher die Handhabe fest mit dem Reglergehäuse des Durchflussmengenreglers verbunden ist,
- Fig. 11: den ebenfalls in einer perspektivischen Seitenansicht gezeigten Durchflussmengenregler gemäß den Figuren 1 bis 10 in der anderen Schiebeendstellung seiner Handhabe, in welcher Schiebeendstellung die Handhabe sowie die mit ihr verbundene Gewindespindel manuell verdrehbar ist,
- Fig. 12: den Durchflussmengenregler aus den Figuren 1 bis 11 in einer Draufsicht auf seine Handhabe,
- Fig. 13: den Durchflussmengenregler aus den Figuren 1 bis 12 in der in Figur 10 gezeigten Schiebeendstellung seiner Handhabe in einem Längsschnitt durch Schnittebene XIII-XIII aus Figur 12,
- Fig. 14: den Durchflussmengenregler gemäß den Figuren 1 bis 13 in einer Draufsicht auf seine die Handhabe tragende Gehäusestirnseite,
- Fig. 15: den Durchflussmengenregler gemäß den Figuren 1 bis 14 in der in Figur 11 gezeigten Schiebeendstellung der hier als Stellrad ausgebildeten Handhabe in einem Längsschnitt durch Schnittebene XV-XV aus Figur 14,
- Fig. 16: den Durchflussmengenregler aus den Figuren 1 bis 15 in einem Querschnitt durch Schnittebene XVI-XVI aus Figur 15,
- Fig. 17: den in einer Leitungsöffnung einer Wasserleitung montierten Durchflussmengenregler gemäß den Figuren 1 bis 16 in einem Längsschnitt,
- Fig. 18: den im Vergleich zu Figur 17 in einer anderen Einbausituation befindlichen Durchflussmengenregler in einem Längsschnitt gemäß den Figuren 1 bis 17,
- Fig. 19: den im Vergleich zu Figur 18 in einem um 90° gedrehten Längsschnitt gezeigten Durchflussmengenregler gemäß den Figuren 1 bis 18,
- Fig. 20: den mit dem Durchflussmengenregler gemäß den Figuren 1 bis 19 ausgestatteten Leitungsabschnitt aus Figur 18 und 19,
- Fig. 21: den Leitungsabschnitt aus Figur 20 mit dem Durchflussmengenregler aus den Figuren 1 bis 20 in einer gedrehten Perspektivdarstellung,
- Fig. 22: den Leitungsabschnitt aus den Figuren 18 bis 21 in einer anderen gedrehten Perspektivdarstellung und

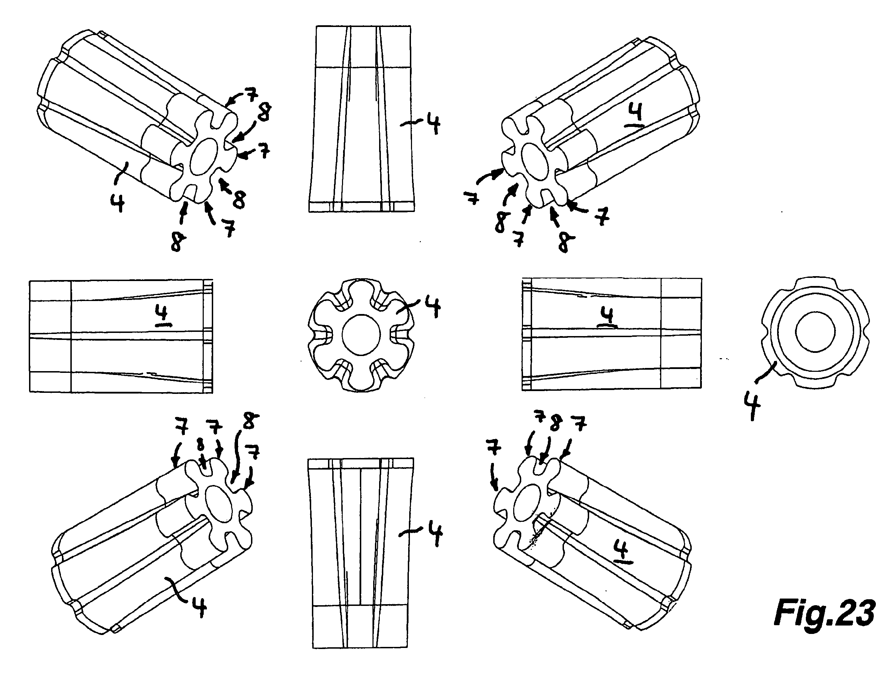

- Fig. 23: den im Durchflussmengenregler gemäß den Figuren 1 bis 22 verwendeten Regelkern in verschiedenen Seiten- und Perspektivansichten.

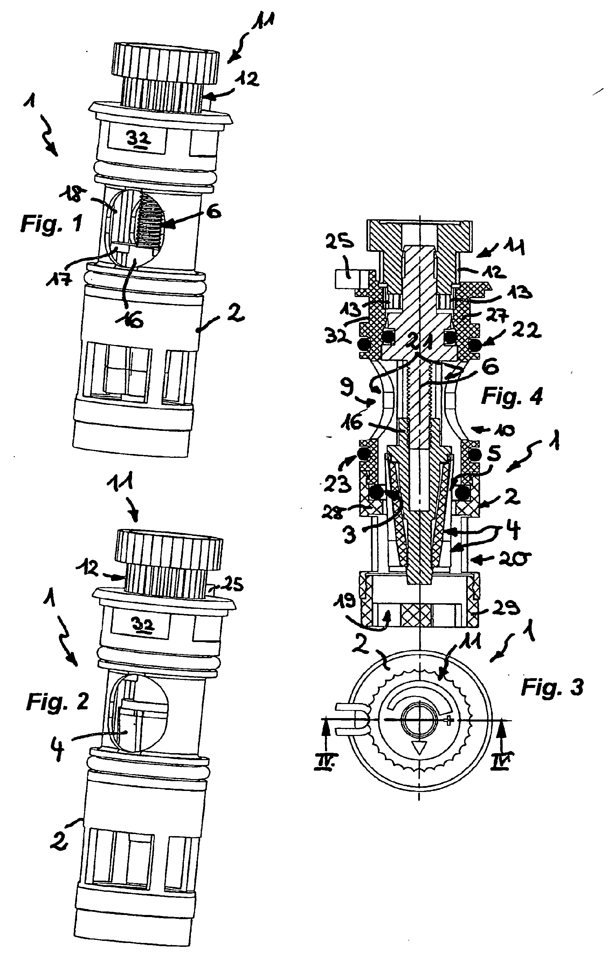

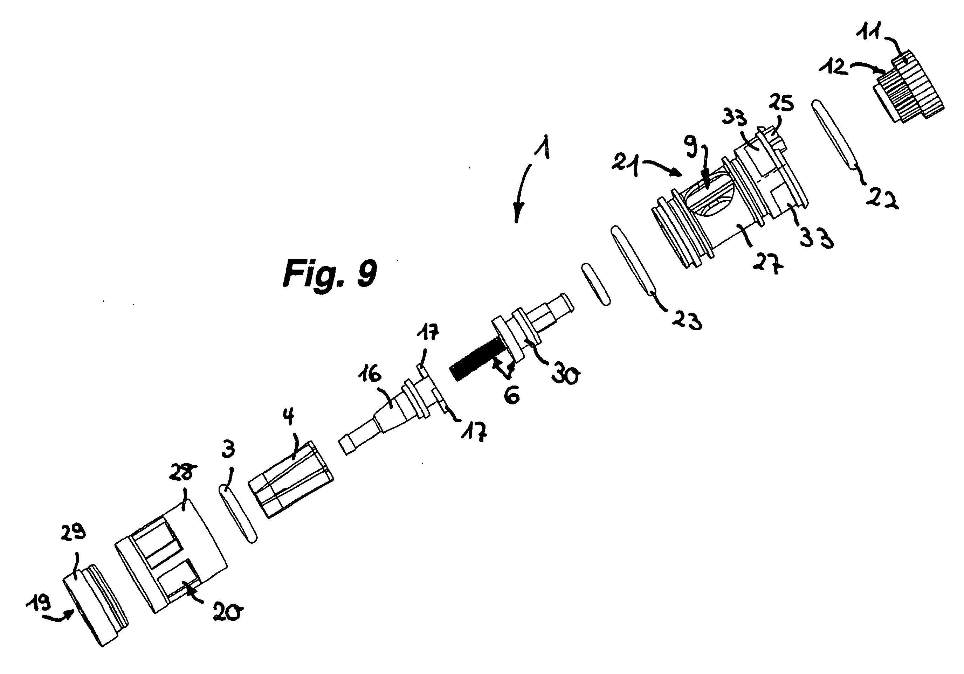

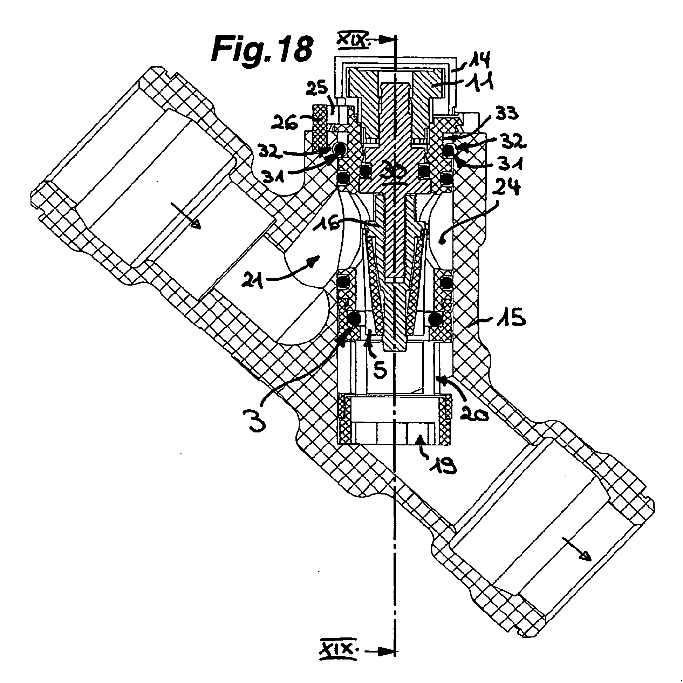

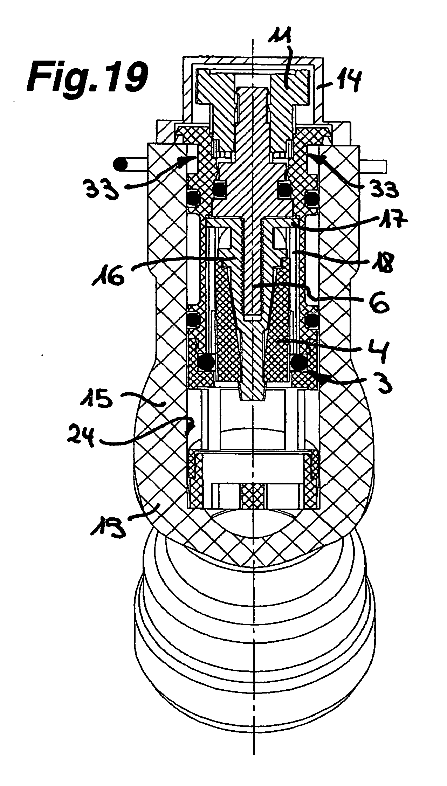

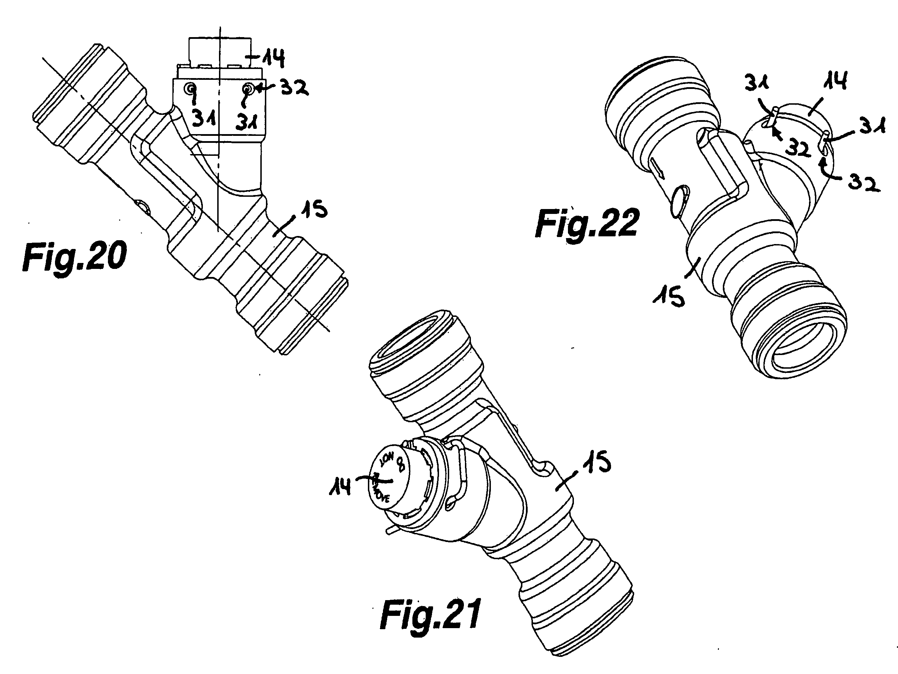

In den Figuren 1 bis 22 ist ein Durchflussmengenregler 1 dargestellt, der ein als Einbaukartusche oder Einsetzpatrone ausgestaltetes Reglergehäuse 2 hat. Im Gehäuse-Innenraum des hülsenförmigen Reglergehäuses 2 ist ein ringförmiger Drosselkörper 3 aus elastischem Material vorgesehen, der zwischen sich und einem Regelkern 4 einen sich unter dem Druck des durchströmenden Fluids verändernden Steuerspalt 5 begrenzt.

Der Regelkern 4 ist an einer Gewindespindel 6 gehalten und in Längsrichtung des Reglergehäuses 2 derart verschieblich geführt, dass zum Variieren des Steuerspalts 5 durch eine Veränderung der Relativposition von Regelkern 4 und Drosselkörper 3 eine Drehbewegung der Gewindespindel 6 in eine Längsbewegung des Regelkerns 4 umsetzbar ist. Durch eine Drehbewegung an der Gewindespindel 6 kann der Regelkern 4 im Gehäuse-Innenraum des Reglergehäuses 2 verschoben und der Steuerspalt 5 derart verändert werden, dass sich eine veränderte Durchflussleistung des Durchflussmengenreglers 1 ergibt.

Um den Steuerspalt 5 durch eine Längsbewegung des Regelkerns 4 zu verändern, kann der Regelkern 4 eine kegelstumpfförmige Außenkontur haben. Zusätzlich oder stattdessen ist es möglich, dass die am Außenumfang des Regelkerns vorgesehene und aus wellenförmigen sowie in Längsrichtung des Regelkerns 4 orientierten Aus- und Einformungen 7, 8 gebildeten Profilierungen sich in Längserstreckung des Regelkerns 4 erweitern. Mit steigendem Wasserdruck wird der elastische Drosselkörper 3 zunehmend derart in die Einformungen 8 des Regelkerns 4 gedrückt, dass sich der Steuerspalt 5 verengt und dass das pro Zeiteinheit maximal durchfließende Wasservolumen auf einen festgelegten Wert eingeregelt wird.

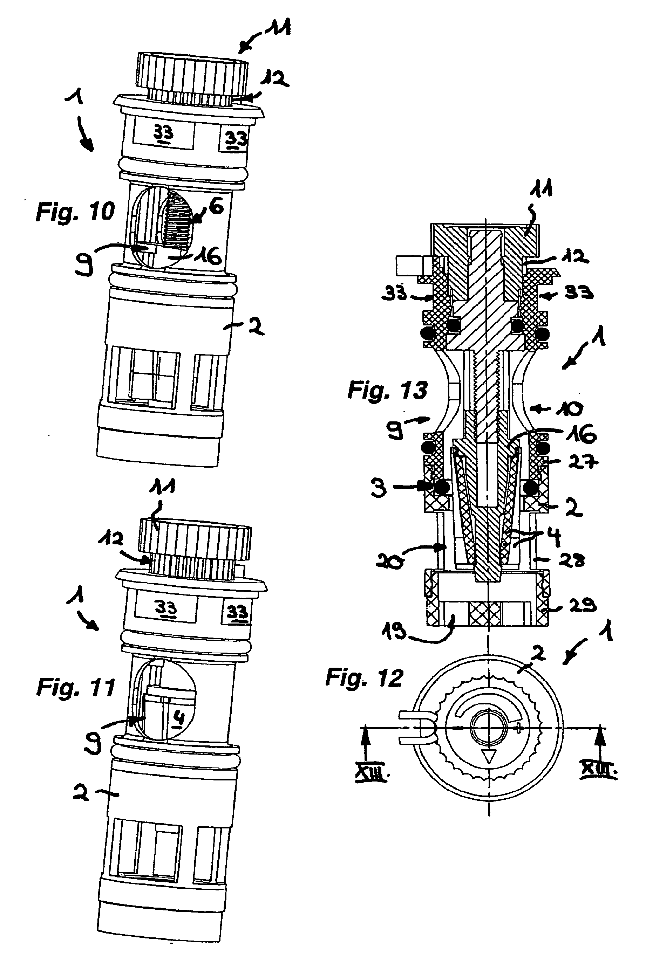

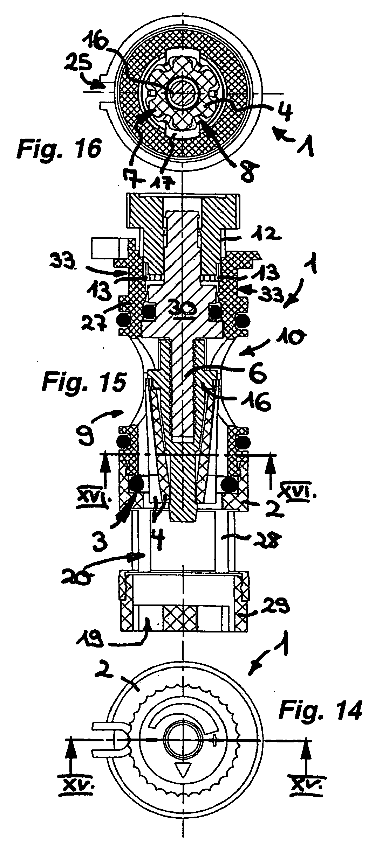

Am Gehäuseumfang des Reglergehäuses 2 sind auf gegenüberliegenden Seiten zwei Gehäuseöffnungen 9, 10 vorgesehen, die einen Fluideinlass bilden. Um den Steuerspalt 5 verändern und den Regelkern 4 gegenüber dem ihn umschließenden Drosselkörper 3 verschieben zu können, ist an dem über die Gehäusestirnseite vorstehenden Spindelende eine hier als Stellrad ausgestaltete Handhabe 11 vorgesehen, die an der Gewindespindel 6 drehfest und zwischen zwei Schiebeendstellungen verschiebbar gehalten ist. Aus einem Vergleich der Figuren 10 bis 15 wird deutlich, dass die Handhabe 11 in der einen, in den Figuren 10 und 13 gezeigten Schiebeendstellung drehfest mit dem Reglergehäuse 2 verbunden ist, während die Handhabe 11 in der in den Figuren 11 und 15 gezeigten anderen Schiebeendstellung manuell verdrehbar über das Reglergehäuse 2 vorsteht. Aus den Längsschnitten in den Figuren 13 und 15 ist erkennbar, dass die Handhabe 11 an ihrem gehäuseseitigen Stirnendbereich eine Verzahnung 12 hat, die in der in den Figuren 10 und 13 gezeigten Schiebeendstellung mit einer komplementären Verzahnung 13 an dem die Handhabe 11 umschließenden Gehäuse-Innenumfang des Reglergehäuses 2 drehfest eingreift.

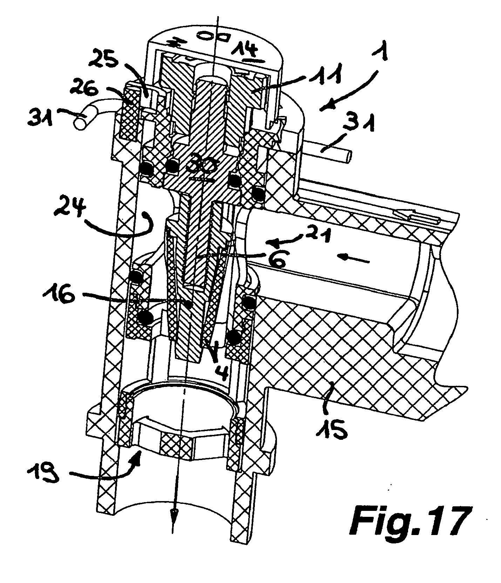

In den Figuren 17 bis 22 ist erkennbar, dass die Handhabe 11 in dieser Schiebeendstellung mit einer Siegelkappe 14 gegen unberechtigte Manipulationen gesichert werden kann, welche Siegelkappe 14 an dem die Einbaukartusche 2 aufnehmenden Leitungsabschnitt 15 befestigbar ist.

Aus den Längsschnitten in den Figuren 4, 6, 13, 15, 17, 18 und 19 wird deutlich, dass auf das Außengewinde der Gewindespindel 6 das Innengewinde eines Mitnehmers 16 aufgeschraubt ist und dass der Mitnehmer 16 mit dem Regelkern 4 verbunden ist. Der Mitnehmer 16 weist auf gegenüberliegenden Seiten zwei Führungsstege 17 auf, die jeweils in eine ihnen zugeordnete Führungsnut 18 am Gehäuse-Innenumfang des Reglergehäuses 2 verschieblich geführt sind.

In den Figuren 17 bis 19 ist erkennbar, dass unterhalb des Steuerspalts 5 und insbesondere an den der Handhabe 11 abgewandten Gehäuseendbereich zumindest eine umfangsseitige Gehäuseöffnung 20 und wenigstens eine stirnseitige Gehäuseöffnung 19 als Fluidauslaß ausgebildet sind. Zwei mit Abstand vom Fluidauslaß 20 am Gehäuseumfang vorgesehene Gehäuseöffnungen 9, 10 bilden den Fluideinlaß 21. Beidseits den als Fluideinlaß 21 dienenden Gehäuseöffnungen 9, 10 sind Ringdichtungen 22, 23 vorgesehen, die um das Reglergehäuse 2 umlaufen. In den Figuren 17 bis 19 ist erkennbar, dass der Durchflussmengenregler 1 mit seinem als Einbaukartusche ausgebildeten Reglergehäuse 2 in eine Leitungsöffnung 24 einsetzbar ist, die in ihrem von der Einbaukartusche ausgefüllten Leitungsabschnitt einen zylindrischen lichten Leitungsquerschnitt ohne größere Querschnittsveränderungen hat.

In den Figuren 3 bis 5 und 17 bis 19 ist erkennbar, dass am Außenumfang des Reglergehäuses 2 eine hier gabelförmig ausgestaltete Drehsicherung 25 vorgesehen ist. Diese Drehsicherung wirkt mit einem Sicherungsbolzen 26 zusammen, der an der die Leitungsöffnung 24 umgrenzenden Stirnwand des Leitungsabschnitts 15 vorsteht.

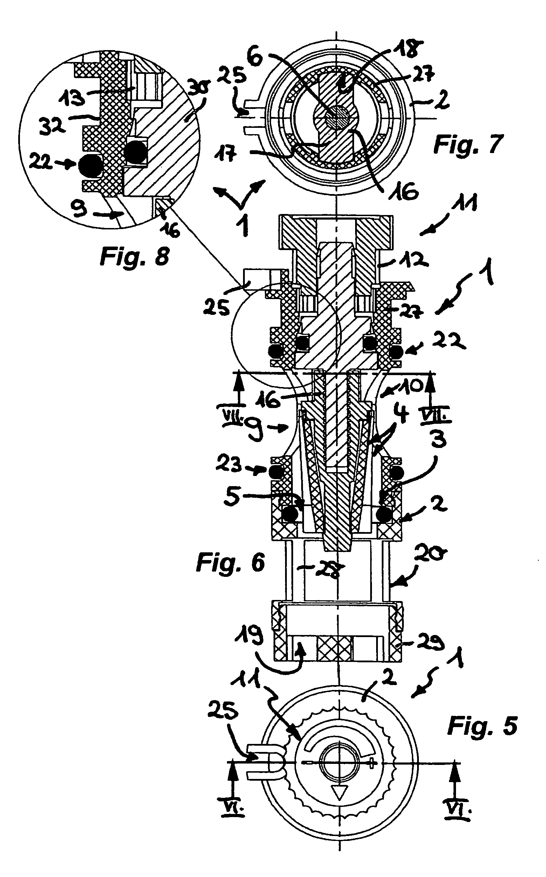

Der hier dargestellte Durchflussmengenregler 1 weist ein aus den miteinander verrastbaren Gehäuseteilen 27, 28 und 29 gebildetes Reglergehäuse 2 auf. In dem Detail-Längsschnitt in Figur 8 ist erkennbar, dass die Gewindespindel mit ihrem Spindelkopf 30 in dem Gehäuseteil 27 in Längsrichtung unverrückbar, aber drehbar verrastbar ist. Der Drosselkörper 3 ist in einer innenumfangsseitigen Nut gehalten, die sich zwischen den Gehäuseteilen 28 und 29 bildet. Während der Fluideinlaß 21 am mittleren Gehäuseteil 28 vorgesehen ist, sind die Fluidauslässe 19 und 20 an den Gehäuseteilen 28 und 29 vorgesehen. Der Durchflussmengenregler 1 kann in der ihn aufnehmenden Leitungsöffnung 24 mittels eines gabelförmigen Sicherungssplintes 31 in Einsetzrichtung unverrückbar gesichert werden, welcher Sicherungssplint 31 von dem die Leitungsöffnung 24 umgrenzenden Umfangsrandbereich des Leitungsabschnitts 15 durch Durchstecköffnungen 32 derart quer zur Einsetzrichtung des Reglergehäuses 2 eingeschoben werden kann, dass die Splintenden parallel zueinander verlaufende und am Gehäuse-Außenumfang des Reglergehäuses 2 angeordnete Sicherungsnuten 33 durchsetzen.

Der Durchflussmengenregler 1 ist mit seinem als Einbaukartusche ausgestalteten Reglergehäuse 2 universell einsetzbar, ohne dass eine besondere konstruktive Anpassung im Bereich der die Einbaukartusche aufnehmenden Leitungsöffnung 24 notwendig wäre. Wird der hier dargestellte Durchflussmengenregler 1 beispielsweise in Gasthermen eingesetzt, können diese an die länderspezifischen oder regionalen Gegebenheiten leicht angepasst werden. Darüber hinaus lassen sich hydraulische Toleranzen leicht ausgleichen, die sich bei der Endkontrolle beispielsweise einer solchen Gastherme ergeben könnten. Der hier dargestellte Durchflussmengenregler 1 erleichtert aufgrund seiner vielseitigen Einsetzbarkeit die Lagerhaltung. Dabei kann die werkseitig eingestellte Durchflussleistung durch eine Sicherungskappe 14 gesichert, welche Sicherungskappe 14 die Handhabe 11 plombiert. Der hier dargestellte Durchflussmengenregler 1 ist darüber hinaus auch in Warmwasser-Heizungsboilern, in Durchlauferhitzern, in Umkehrosmoseanlagen oder in Reihenwaschanlagen vorteilhaft einsetzbar; auch ist es möglich, mit Hilfe des hier dargestellten Durchflussmengenreglers 1 eine Gleichverteilung in Warmwasser- und Heizwasser-Systemen einzustellen.

Anstatt einer manuellen Betätigung ist auch ein Schrittmotor zur Drehverstellung anflanschbar, so dass während des Justierungsprozesses und/oder des Betriebes auch ein Soll-Wert und/oder ein bedarfsgesteuerter Nenndurchfluß einstellbar ist. In einer erweiterten Ausführungsform lässt sich dies auch leicht in einen Regelkreis integrieren, der beispielsweise noch ein Messglied zur Erfassung des tatsächlichen Durchflusses enthält.

## Patentansprüche

1. Durchflussmengenregler (1) mit einem Reglergehäuse (2), in dessen Gehäuse-Innenraum ein Regelkern (4) sowie ein den Regelkern (4) umschließender ringförmiger Drosselkörper (3) aus elastischem Material vorgesehen ist, die (3, 4) zwischen sich einen sich unter dem Druck des durchströmenden Fluids verändernden Steuerspalt (5) begrenzen, wobei der Regelkern (4) an seinem Außenumfang eine sich in Längsrichtung verändernde Regelprofilierung (7, 8) trägt, wobei der Regelkern (4) zum Variieren des Steuerspalts (5) durch eine Veränderung der Relativposition von Regelkern (4) und Drosselkörper (3) in Längsrichtung verschieblich geführt ist, und wobei am Reglergehäuse (2) zumindest eine als Fluideinlass (21) ausgestaltete Gehäuseöffnung (9, 10) vorgesehen ist, **dadurch gekennzeichnet, dass** der Regelkern (4) an einer Gewindespindel (6) gehalten ist, dass eine Drehbewegung der Gewindespindel (6) in eine Längsbewegung des Regelkerns (4) umsetzbar ist, dass die Gewindespindel (6) von einer Gehäusestirnseite aus betätigbar ist, und dass die zumindest eine als Fluideinlass ausgestaltete Gehäuseöffnung (9, 10) am Gehäuseumfang des als Einbaukartusche oder Einsetzpatrone ausgestalteten Reglergehäuses (2) angeordnet ist.

2. Durchflussmengenregler nach Anspruch 1, **dadurch gekennzeichnet, dass** an einem über eine Gehäusestirnseite vorstehenden Spindelende eine Handhabe (11) drehfest und zwischen zwei Schiebeendstellungen verschiebbar gehalten ist, und dass die Handhabe (11) in der einen Schiebeendstellung manuell verdrehbar und in der anderen Schiebeendstellung drehfest mit dem Reglergehäuse (2) verbunden ist.

3. Durchflussmengenregler nach Anspruch 2, **dadurch gekennzeichnet, dass** die vorzugsweise als Stellrad ausgestaltete Handhabe (11) eine Verzahnung (12) oder dergleichen Profilierung trägt, die in einer Schiebeendstellung der Handhabe (11) in eine komplementäre Verzahnung (13) oder dergleichen Gegenprofilierung am Reglergehäuse (2) drehfest eingreift.

4. Durchflussmengenregler nach einem der Ansprüche 1 bis 3, **dadurch gekennzeichnet, dass** auf das Außengewinde der Gewindespindel (6) das Innengewinde eines Mitnehmers (16) aufgeschraubt ist und dass der Mitnehmer (16) mit dem Regelkern (4) verbunden ist.

5. Durchflussmengenregler nach einem der Ansprüche 1 bis 4, **dadurch gekennzeichnet, dass** der Mitnehmer (16) zumindest einen Führungssteg (17) trägt, welcher Führungssteg (17) in einer ihm zugeordneten und in Gehäuse-Längsrichtung orientierten Führungsnut (18) am Gehäuse-Innenumfang des Reglergehäuses (2) verschieblich geführt ist.

6. Durchflussmengenregler nach einem der Ansprüche 2 + bis 5, **dadurch gekennzeichnet, dass** vorzugsweise unterhalb des Steuerspalts (5) und insbesondere an dem der Handhabe (11) abgewandten Gehäuseendbereich zumindest eine umfangsseitige und/oder wenigstens eine stirnseitige Gehäuseöffnung als Fluidauslass (19, 20) ausgestaltet ist.

7. Durchflussmengenregler nach einem der Ansprüche 1 bis 6, **dadurch gekennzeichnet, dass** am Gehäuse-Außenumfang des Reglergehäuses (2) vorzugsweise beidseits zumindest einer als Fluideinlass (21) dienenden Gehäuseöffnung eine Ringdichtung (22, 23) oder dergleichen umlaufende Dichtung vorgesehen ist.

8. Durchflussmengenregler nach einem der Ansprüche 1 bis 7, **dadurch gekennzeichnet, dass** am Außenumfang des Reglergehäuses (2) eine Drehsicherung (25) vorgesehen ist.

9. Durchflussmengenregler nach einem der Ansprüche 1 bis 8, **dadurch gekennzeichnet, dass** die Handhabe (11) auf die Gewindespindel (6) und/oder der Regelkern (4) auf den Mitnehmer vorzugsweise unlösbar verrastbar ist.

10. Durchflussmengenregler nach einem der Ansprüche 1 bis 8, **dadurch gekennzeichnet, dass** der Handhabe eine Skalierung zugeordnet ist.

11. Durchflussmengenregler nach Anspruch 10, **dadurch gekennzeichnet, dass** die der Handhabe zugeordnete Skalierung eine zudem auf die Handhabe ausgeübten Umdrehungsweg proportionale Skaleneinteilung hat.

## Claims

1. Flow regulator (1) having a regulator housing (2) in the inner space of which is provided a regulator core (4) and an annular throttle member (3) of elastic material that surrounds the regulator core (4), which (3, 4) delimit between them a control gap (5) that varies under the pressure of the fluid flowing through, the regulator core (4) carrying on its outer circumference a regulator profile (7, 8) that varies in the longitudinal direction, the regulator core (4) being movably guided in the longitudinal direction in order to vary the control gap (5) by changing the relative position of the regulator core (4) and throttle member (3), and wherein at least one housing opening (9, 10) in the form of a fluid inlet (21) is provided on the regulator housing (2), **characterised in that** the regulator core (4) is held on a threaded spindle, **in that** a rotary movement of the threaded spindle (6) can be converted into a longitudinal movement of the regulator core (4), **in that** the threaded spindle (6) can be actuated from a housing end face, and **in that** the at least one housing opening (9, 10) configured as a fluid inlet is arranged on the housing circumference of the regulator housing (2) which is embodied as a mountable or insertable cartridge.

2. Flow regulator according to claim 1, **characterised in that** a handle (11) is secured on a spindle end projecting beyond a housing end face, so as to be rotation-locked therewith and be movable by sliding between two end positions, and **in that** the handle (11) is manually rotatable in one end position and is rotation-locked to the regulator housing (2) in the other end position.

3. Flow regulator according to claim 2, **characterised in that** the handle (11) preferably configured as a handwheel has teeth (12) or similar profiling that engages in rotation-locked manner in complementary teeth (13) or similar mating profiling on the regulator housing (2) in an end position of the handle (11).

4. Flow regulator according to one of claims 1 to 3, **characterised in that** the internal thread of a follower (16) is screwed onto the external thread of the threaded spindle (6) and **in that** the follower (16) is connected to the regulator core (4).

5. Flow regulator according to one of claims 1 to 4, **characterised in that** the follower (16) carries at least one guide strip (17) which is movably guided in a guide groove (18) associated therewith and oriented in the longitudinal direction of the housing on the inner circumference of the regulator housing (2).

6. Flow regulator according to one of claims 2 to 5, **characterised in that** at least one housing opening on the circumferential side and/or at least one housing opening on the end face is or are embodied as fluid outlets (19, 20) preferably underneath the control gap (5) and in particular on the housing end region that is remote from the handle (11).

7. Flow regulator according to one of claims 1 to 6, **characterised in that** a sealing ring (22, 23) or similar circumferential seal is provided on the outer circumference of the regulator housing (2), preferably on both sides of at least one housing opening serving as a fluid inlet (21).

8. Flow regulator according to one of claims 1 to 7, **characterised in that** a rotation preventer (25) is provided on the outer circumference of the regulator housing (2).

9. Flow regulator according to one of claims 1 to 8, **characterised in that** the handle (11) can be locked onto the threaded spindle (6) and/or the regulator core (4) can be locked onto the follower, preferably non-releasably.

10. Flow regulator according to one of claims 1 to 8, **characterised in that** a scale is associated with the handle.

11. Flow regulator according to claim 10, **characterised in that** the scale associated with the handle has a scale subdivision that is proportional to the degree of rotation exerted on the handle.

## Revendications

1. Régulateur de débit (1) avec un boîtier de régulateur (2) à l'intérieur duquel sont prévus un noyau de régulation (4) et un corps d'étranglement annulaire (3) en matériau élastique qui entoure le noyau de régulation (4), lesquels (3, 4) limitent entre eux une fente de commande (5) variable sous la pression du fluide traversant, le noyau de régulation (4) portant sur sa périphérie extérieure un profilage de régulation (7, 8) variable en direction longitudinale, le noyau de régulation (4) étant guidé en translation en direction longitudinale pour faire varier la fente de commande (5) par un changement de la position relative du noyau de régulation (4) et du corps d'étranglement (3), et au moins une ouverture de boîtier (9, 10) conçue comme une entrée de fluide (21) étant prévue sur le boîtier de régulateur (2), **caractérisé en ce que** le noyau de régulation (4) est maintenu sur une broche filetée (6), qu'un mouvement de rotation de la broche filetée (6) peut être transformé en un mouvement longitudinal du noyau de régulation (4), que la broche filetée (6) peut être actionnée depuis une face frontale du boîtier, et que ladite au moins une ouverture de boîtier (9, 10) conçue comme une entrée de fluide est disposée sur la périphérie de boîtier du boîtier de régulateur (2) conçu comme une cartouche à monter ou à insérer.

2. Régulateur de débit selon la revendication 1, **caractérisé en ce qu'**un moyen de manipulation (11) est maintenu de manière fixe en rotation à une extrémité de broche en saillie par rapport à une face frontale de boîtier et de manière mobile entre deux positions extrêmes de coulissement, et que le moyen de manipulation (11) est relié au boîtier de régulateur (2) de manière mobile en rotation manuellement dans une position extrême de coulissement et de manière fixe en rotation dans l'autre position extrême de coulissement.

3. Régulateur de débit selon la revendication 2, **caractérisé en ce que** le moyen de manipulation (11) réalisé de préférence sous la forme d'une roue de réglage porte une denture (12) ou un profilage analogue qui, dans une position extrême de coulissement du moyen de manipulation (11), s'engage de manière fixe en rotation dans une denture complémentaire (13) ou un profilage complémentaire analogue du boîtier de régulateur (2).

4. Régulateur de débit selon une des revendications 1 à 3, **caractérisé en ce que** le filetage intérieur d'un élément d'entraînement (16) est vissé sur le filetage extérieur de la broche filetée (6) et que l'élément d'entraînement (16) est relié au noyau de régulation (4).

5. Régulateur de débit selon une des revendications 1 à 4, **caractérisé en ce que** l'élément d'entraînement (16) porte au moins une branche de guidage (17), laquelle branche de guidage (17) est guidée de manière coulissante sur la périphérie intérieure du boîtier de régulateur (2) dans une rainure de guidage (18) qui lui est associée et qui est orientée dans la direction longitudinale du boîtier.

6. Régulateur de débit selon une des revendications 2 à 5, **caractérisé en ce qu'**au moins une ouverture de boîtier côté périphérie et/ou au moins une ouverture de boîtier côté frontal est conçue comme une sortie de fluide (19, 20) de préférence au-dessous de la fente de commande (5) et en particulier sur la partie terminale de boîtier éloignée du moyen de manipulation (11).

7. Régulateur de débit selon une des revendications 1 à 6, **caractérisé en ce qu'**un joint annulaire (22, 23) ou un joint périphérique analogue est prévu sur la périphérie extérieure de boîtier du boîtier de régulateur (2), de préférence des deux côtés d'au moins une ouverture de boîtier servant d'entrée de fluide (21).

8. Régulateur de débit selon une des revendications 1 à 7, **caractérisé en ce qu'**un blocage antirotation (25) est prévu sur la périphérie extérieure du boîtier de régulateur (2).

9. Régulateur de débit selon une des revendications 1 à 8, **caractérisé en ce que** le moyen de manipulation (11) peut être encliqueté sur la broche filetée (6) et/ou le noyau de régulation (4) sur l'élément d'entraînement, de préférence de manière non détachable.

10. Régulateur de débit selon une des revendications 1 à 8, **caractérisé en ce qu'**une échelle est associée au moyen de manipulation.

11. Régulateur de débit selon la revendication 10, **caractérisé en ce que** l'échelle associée au moyen de manipulation a en outre une graduation proportionnelle à la course de rotation exercée sur le moyen de manipulation.
